**Europäisches Patentamt**

**European Patent Office**

**Office européen des brevets**

(19)

(11) **EP 1 398 689 A2**

(12) **EUROPÄISCHE PATENTANMELDUNG**

(43) Veröffentlichungstag:
**17.03.2004 Patentblatt 2004/12**

(51) Int Cl.⁷: **G06F 3/14**

(21) Anmeldenummer: 03018536.7

(22) Anmeldetag: **16.08.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **10.09.2002 DE 20213982 U**

(71) Anmelder: **Wincor Nixdorf International GmbH 33106 Paderborn (DE)**

(72) Erfinder:
• **Baitz, Günter
13629 Berlin (DE)**
• **Glaschick, Rainer
33106 Paderborn (DE)**

(54) **Teilfenster-Auswahl mittels Bildinhalt**

(57)     Einrichtung zur Selektion und Ausgabe eines Teilfensters einer graphischen Anzeige eines Computers, wobei die Position des Teilfensters durch den Bildinhalt bestimmt wird.

EP 1 398 689 A2

**Beschreibung**

Die Erfindung betrifft den Anschluss graphischer Anzeigen an Computer, insbesondere an Kassensysteme.

Personal Computer werden normalerweise mit einer graphischen Anzeige betrieben, für die die Bildaufbereitung in den Computer integriert ist. Bekannteste Form ist die VGA-Karte, ursprünglich von IBM unter der Bezeichnung 'video graphics array' entwickelt. Wie der Name sagt, ist der Ausgang der Karte ein Videosignal als Raster-Scan, welches in Echtzeit von einem Sichtgerät angezeigt wird.

Bei Kassensystemen hat es sich bewährt, auf handelsübliche Personal Computer bzw. deren Komponenten zurückzugreifen und insbesondere deren Betriebssysteme zu verwenden. Problematisch ist daran jedoch, dass Kassen andere Anforderungen an die Anzeigen stellen. Insbesondere sind zwei Anzeigen unterschiedlichen Inhalts bereitzustellen; eine erste für die Bedienperson und eine zweite für den Kunden.

Eine Lösung hierfür ist in der WO 99/14658 angegeben. Die Veröffentlichung beschreibt eine Schaltung, bei der ein vordefinierter Teil der Ausgabe einer VGA-Karte selektiert und auf einem angeschlossenen Bildschirm angezeigt wird. In der Anmeldung sind weitere Lösungen aufgeführt, die dazu dienen, eine Teil der anzuzeigenden Daten auszuwählen.

Allen gemeinsam ist es, dass die Eckdaten der Fenster entweder fest eingestellt sind oder sich in einem Register befinden, das über einen zusätzlichen Ein-Ausgabe-Kanal angesprochen werden muss. Letzteres erfordert bei modernen, speichergeschützten Betriebssystemen eine Modifikation des Anzeigetreibers, um diese Information hardwarenah ausgeben zu können.

Die Erfindung stellt sich die Aufgabe, die Auswahl des anzuzeigenden Bereichs derart zu gestalten, dass dieses mit einfachen Mitteln, leicht anpassbar und zuverlässig durch den Programmierer der Anwendungen erreicht werden kann.

Die Lösung besteht darin, die Information über die Lage der Fenster in den Bildinhalt zu codieren. Die verschiedenen Möglichkeiten hierzu werden in der folgenden Beschreibung im einzelnen erläutert.

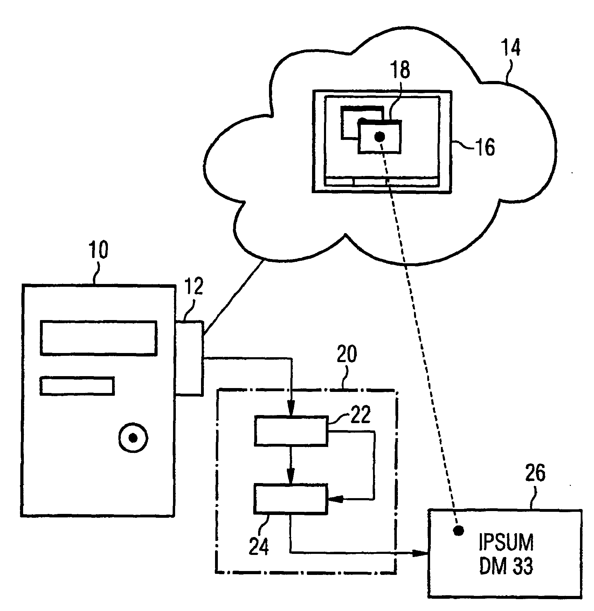

In Fig. 1 ist schematisch eine Anordnung gezeigt, die die Erfindung verwendet. Eine Zentraleinheit 10 eines Rechners besitzt einen Anschluss 12 für einen Bildschirm. Dieser sendet Videosignale, die, wie durch die Wolke 14 angedeutet, davon ausgehen, dass an der Schnittstelle ein Vollbildschirm 16 angeschlossen ist, auf dem ein Teilfenster 18 in verschieblichen Positionen geöffnet ist.

Für Wartungszwecke wird ein solcher Bildschirm tatsächlich angeschlossen. Im Normalbetrieb bei einer Kasse jedoch wird statt dessen ein Splitter 20 angeschlossen, der eine Einrichtung 24 enthält, die einen Teil der anzuzeigenden Daten auswählt und an eine separate Anzeige 26 weiterleitet. Diese Anzeige soll lediglich die in dem Teilfenster 18 sichtbare Information anzeigen.

Hierzu verwendet die Erfindung eine im folgenden beschriebenen Diskriminator 22, der aus den Bilddaten die Koordinaten des Teilfensters entnimmt und an den Splitter 24 weiterreicht. Nicht gezeigt ist die im folgenden auch beschriebene Variante, bei der der Diskriminator auch auf Daten und Signale zugreift, die im Splitter 24 anfallen.

Im folgenden wird gegebenenfalls davon ausgegangen, dass das VGA-Signal zunächst wieder digitalisiert und in einen Bildspeicher mit zwei Zugriffspfaden (dual port) geschrieben wird, aus dem dann die Ansteuerung des Flachbildschirms die Pixeldaten holt.

Die Einrichtung zu Bestimmung der Lage und ggf. auch Größe des Fensters arbeitet dann auf diesem Bildwiederholspeicher, für den sie konzeptionell einen dritten Zugriffspfad benötigt. Da dieser nicht die volle Bandbreite benötigt, kann er beispielsweise in den Austastlücken wirksam werden, in denen keine Daten des VGA-Signals geschrieben werden. In diesem Fall arbeitet die Einrichtung zur Bestimmung der Lage des Fensters derart, dass sie in regelmäßigen Abständen die Bilddaten inspiziert und entsprechend den nachfolgend beschriebenen Methoden auswertetet.

Alternativ kann ein Diskriminator eingerichtet werden, der die von der Digitalisiereinheit an den Speicher gesendeten Daten sowie die zugehörigen Zeilen- und Spaltenadressen überwacht. Ein Vergleicher vergleicht wahlweise die Adressdaten oder die Bilddaten (oder beide) mit vorgegebenen Werten. Anstatt also aktiv die vorbestimmten Bereiche des Bildwiederholspeichers auszulesen, filtert der Diskriminator diese Daten aus dem in den Bildwiederholspeicher fließenden Datenstrom heraus. Ferner wird gegebenenfalls vorausgesetzt, dass bei der Abfrage von Bildinhalten mit Intervallen und Bereichen gearbeitet wird und nicht eine exakte Gleichheit verlangt wird, weil die Digitalisierung durch Digitalisierungsfehler um wenige Bits von den Werten abweichen kann, die seitens des Programms im Rechner als Bildpunktfarbwerte angegeben wurden.

Eine einfach 1-Bit Digitalisierung oder Quantisierung erfolgt, sofern benötigt, auch direkt auf dem Videosignal durch eine Schwellwertschalter. Die Auswahl hängt von den sonstigen Gegebenheiten ab und ist dem Fachmann wohl vertraut.

Die im folgenden dargestellten Ausführungsformen der Erfindung gehen stets davon aus, das der anzuzeigenden Bereich auf dem Gesamtschirm als Fenster erscheint, da dies die Programmierung seitens der Anwendungen wesentlich übersichtlicher macht.

Eine erste Ausführungsform der Erfindung benutzt eine spezielle Farbe, um einen Eckpunkt des anzuzeigenden Fensters zu markieren. Im einfachsten Fall wird hierzu ein Pixel verwendet, welches die obere linke Ecke des anzuzeigenden Bereichs markiert. Die Größe des anzuzeigenden Bereichs ist fest vorgegeben. Die Farbe wird an anderen Stellen des Bildschirms nicht verwendet. Damit ist es ausreichend, einen wie oben beschriebenen Diskriminator in die Pixeldaten einzuschleifen, der die Zeilen- und Spaltenadresse abgreift, wenn die genannte Farbe auftritt.

Diese einfache Lösung ist nicht unbedingt zuverlässig, da nur ein einzelnes Pixel verwendet wird. Auch ist dieses auf dem Vollbildschirm nicht gut erkennbar. Eine Verbesserung benutzt daher ein Quadrat von z.B. 4x4 Pixeln und benutzt von den ermittelten Adressen die letzen drei Bit nicht, so dass eine stabile Adresse im Raster von 8 Pixeln entsteht.

Besser verwendbar ist eine Variante, bei der davon ausgegangen wird, dass der anzuzeigende Bereich durch einen Rahmen einer speziellen Farbe markiert ist. Fenster haben in den meisten Fenstersteuerungen einen Rahmen einer vorgegebenen Farbe, die vom Anwendungsprogramm setzbar ist. Falls das Anwendungsprogramm die Farbe des Rahmens nicht ohne weiteres ändern kann, muss es das Fenster etwas zu groß bestimmen und innerhalb des vom Betriebssystem gegebenen Fensters einen weiteren Rahmen der reservierten Farbe schreiben. Der genannte Diskriminator wird auf diese (und die gemäß der Digitalisierungsgenauigkeit unmittelbar benachbarten) Farben eingestellt. Tritt eine solche Farbe auf, wird die Pixeladresse in einen Speicher, z.B. eine FIFO, eingeschrieben. Ein Mikroprozessor liest aus dem FIFO die Koordinaten aus. Im einfachsten Fall wird das erste Pixel der vorbestimmten Farbe genommen und bestimmt die obere linke Ekke des auszugebenden Bereichs, dessen gesamte Größe fest vorgegeben ist; dies entspricht der bereits beschriebenen einfachen Variante.

Besser ist es jedoch, aus den Daten ein Rechteck zu bestimmen und nur die Daten zu verwenden, die ein Rechteck bilden. Da eine Änderung des anzuzeigenden Ausschnitts nur selten erfolgt, ist die Bestimmung des Rechtecks nicht zeitkritisch und kann mittels Versuch und Irrtum erfolgen. Dabei ist es unerheblich, ob dem Mikroprozessor die Fenstergröße vorgegeben ist oder diese zusammen mit der Position bestimmt. Eine stärker Hardware-orientierte Variante kann wie folgt gestaltet werden: Bei einer Reihe horizontal aufeinander folgender Pixel der vorgegebenen Randfarbe wird nur der Beginn und das Ende dieses horizontalen Strichs von der Vergleichshardware abgelegt und bestimmt die horizontalen Linien. Um vertikale Linien zu bestimmen, wird ein eine Zeile lange Bitspeicher verwendet, in den das Auftreten der Pixel der vorbestimmten Farbe eingetragen wird. Dabei wird der vorherige Inhalt mit dem neu zu setzende Bit verglichen und bei einem Unterschied die Spaltenadresse abgelegt. Der Zeilenspeicher wird bevorzugt als Schieberegister ausgebildet, weil ein Direktzugriff nicht notwendig ist.

Wird auf diese Art und Weise sichergestellt, dass ein ununterbrochener Rahmen einer vorgegebenen Farbe den Anzeigebereich einrahmt, ist eine hohe Sicherheit gegen Fehlinterpretationen gegeben und dennoch für das Anwendungsprogramm leicht der anzuzeigende Bereich festzulegen, ohne dass irgendwelche Änderungen am Betriebssystem notwendig sind oder eine spezielle Kommunikationsleitung bereitgestellt werden muss. Bei einer Erweiterung wird zusätzlich das erste nicht-schwarze Pixel einer Zeile als Hintergrundfarbe gespeichert und eine senkrechte Linie an dem Wechsel von Hintergrundfarbe zu Randfarbe erkannt. In ähnlicher Art kann der Rand auch durch den Übergang von zwei oder mehr Farben erkannt werden. Dies ist insbesondere bei simulierten 3D-Rahmen der Fall, bei denen links von dem eigentlichen Rahmen eine hellere und rechts eine dunklere senkrechte Linie erzeugt wird und so eine Art Schattenwurf zustande kommt.

Eine andere Ausführungsform der Erfindung benutzt, dass Programmfenster in Microsoft Windows an der linken oberen Ecke ein Icon des Programms verwenden. Dies kann auch in X-Windows so erreicht werden und hängt dort vom Window-Manger, z.B. 'twm', ab. Dieses Icon ist vom Anwendungsprogramm leicht einstellbar. Die Lösung der Erfindung besteht darin, dass ein vorbestimmtes Icon erkannt wird und die linke obere Ecke signalisiert. In dem Artikel von Peter Richert, Peter Furchert und Fabin Zink, "Weg mit 'Ruf ... mich ... an', TV-Werbeausblendung für den Videorecorder, Zeitschrift c't 13/1999 (Heise-Verlag Hannover), S. 198, ist eine Einrichtung für ein Fernsehbild beschrieben, die das Vorhandensein eines statisches Senderlogos als Pixelmuster in dem Fernsehbild erkennt. In der Anwendung auf die vorliegende Erfindung wird nicht nur die Existenz, sondern gleichzeitig auch die Lage des Pixelmusters abgelegt. Dieses stellt dann den Eckpunkt des anzuzeigenden Ausschnitts dar, dessen Größe vorbestimmt ist.

In den bislang beschriebenen Ausführungsformen der Erfindung wird ein visuell erkennbares graphisches Element in der dargestellten Information lokalisiert. Ein strukturell anderer Weg zur Übermittlung der Koordinaten wird nachfolgend beschrieben, bei dem die Nachricht ohne Rücksicht auf die visuelle Darstellung codiert wird. In dieser alternativen Ausführungsform stellen vorgegebene Pixel die Bits einer Nachricht dar, die dem Controller die Position des Ausschnitts übermitteln.

In der einfachsten Variante dieser alternativen Ausführungsform wird hierzu eine senkrechte Linie im Bild verwendet, die in einer vorbestimmten Spalte zu finden ist. Die Bildinformation wird lediglich binär quantisiert, was durch einen einfachen Schwellwertschalter erfolgt. Pro Bildzeile wird also ein Bit übertragen. Bei einem Bildschirm von 800x600 Pixeln sind das maximal 600 Bits, z.B. 512 oder 64 Bit. Diese Spalte darf natürlich nicht in einem anzuzeigenden Bereich liegen; am besten wird ein eigenes, immer zuoberst liegendes Fenster verwendet. Die Verwendung einer Spalte hat den Vorteil, dass kein schneller Speicher benötigt wird.

In einer alternativen Variante wird eine horizontale Pixelzeile verwendet, wobei dann eine vorgegebene Anzahl von Pixeln, auf je ein Bit reduziert, in einer vorgegebene Zeile beginnend mit einer vorgegebenen Position in einen Speicher für die Koordinaten des Ausschnitts geschrieben wird. Durch die heute übliche farbige Darstellung fallen pro Pixel drei Farben und somit zumindest drei Bits bei binärer Quantisierung an; allerdings steigt damit die Bitrate für den Speicher auf das dreifache. Auch kann anstelle einer binären Quantisierung eine Digitalisierung höherer Auflösung verwendet werden. Wegen der damit erhöhten Bitrate ist dies eher für die Codierung in vertikalen Linien geeignet, die damit dann jedoch wesentlich weniger auffällig sind.

In einer Variante bei horizontaler Codierung wird das Farbsignal zunächst binär quantisiert, so dass drei Bit pro Pixel entstehen, z.B. pink als RGB=101. Diese Bitkombination ist das Triggersignal. Bei den nachfolgenden Bits ist das B-Bit das Datenbit und das G-Bit der Bit-Takt. Die Bitfolge 0110 wird dann als Bitfolge "101-010-000-011-000-011-000-010-000-101" codiert. Hierbei wurde zwischen zwei Bits ein schwarzes Pixel eingefügt, das, weil kein G-Bit, ignoriert wird. Außerdem wurde die Sequenz durch ein Pixel mit R-Bit, hier der Trigger-Bitkombination, beendet.
Eine andere Variante benutzt drei Pixel zur Codierung eines Bits. Das erste Pixel ist die Trigger-Bitkombination, dann folgt das Datenbit wie oben. Beispielsweise wird dann ein L-Bit durch die Bitkombination '101-110-100' und ein H-Bit durch die Bitkombination '101-111-101' codiert. Zur Sicherheit kann noch ein Stop-Bitmuster, insbesondere als Inverses des letzten, angefügt werden, so dass ein L-Bit durch '101-110-100-011' und ein H-Bit durch '101-111-101-010' codiert wird.

Bevorzugt wird dabei von bekannten Verfahren zur Sicherung von Datenübertragungen, d.h. von fehlererkennenden und fehlerkorrigierenden Codes Gebrauch gemacht. Wird dann das zuvor angegebene Verfahren verwendet, indem eine vorgegebene Farbe die Bitcodierung auslöst, dann kann auf eine feste Vorgabe der Position verzichtet werden. Dann wird das Videosignal zunächst in 3 Farbbits quantisiert und der o.g. Bitterkenner auf diese Information angewendet. Ergebnis ist ein Bitstrom, der mit einer wesentlich geringeren Datenrate als das Videosignal eintrifft und von einem Mikroprozessor auf eine korrekt dekodierbare Bitsequenz hin untersucht wird und diese dann verwendet wird.

Im übrigen können hier die aus der Magnetspeichertechnik verwendeten Verfahren eingesetzt werden. Dabei wird wahlweise nur das binär quantisierte Helligkeitssignal oder, wie beschrieben, farbcodierte Bits verwendet. Es wird also aus dem Videosignal ein Bitstrom abgeleitet. Dieser ist codiert, also ob es sich um das Signal eine Magnetspeichers handelt, also z.B. MFM-Codierung der Bits und ein Folge von Präambel, Datenblock und CRC. Zur Decodierung können handelsübliche Steuerungen für Magnetspeicher (Floppy oder Festplatte) verwendet werden. Auch in diesem Fall ist die Position der Pixeldaten auf dem Bildschirm ohne Bedeutung. Um die Lage des anzuzeigenden Fensters an den Controller zu übermitteln, wird ein kleines Fenster geöffnet, die codierte Nachricht für die Zeit von ein oder mehreren Bildwechseln angezeigt und das Fenster geschlossen. Da die Redundanz der Nachrichten sehr hoch ist, stellt der restliche Inhalt des Bildschirms keine gültige Nachricht dar. In der Regel wird das Fenster, in dem die Position angeben ist, dauerhaft geöffnet sein und die Daten permanent anzeigen. Sollte dann doch zufällig ein sonstiger Inhalt als Steuerinformation interpretiert werden, so ist mit dessen Verschwinden die fehlerhafte Anzeige durch die richtige korrigiert.

In einer Weiterbildung wird bei dem Fehlen der codierten Information die Anzeige des Ausschnitts deaktiviert (dunkelgesteuert), so dass auf diese Art die Anzeige leicht aktiviert und deaktiviert werden kann. Im übrigen kann die Information in diesem Fall auch in dem Fenster selbst in einem nicht angezeigten Bereich vorhanden sein. Dies kann im Innern ein Bereich am unteren Rand sein, der nicht mit angezeigt wird. Oder es kann, bevorzugt, in der Titelzeile codiert sein. Dort ist ohnehin in der Regel in der Mitte nichts außer einem permanenten Muster oder Farbverlauf vorhanden. Wird das Fenster minimiert, so wird auch die Anzeige des Ausschnitts deaktiviert und dunkelgesteuert.

Bei einer Variante der Codierung über den Bildinhalt wird wieder nur die Helligkeitsinformation binär quantisiert. Die Variante besteht nunmehr darin, die Information als Buchstaben und Ziffern auf dem Bildschirm darzustellen und sodann durch eine optische Zeichenerkennung die codierte Information zurückzugewinnen. Schrift ist ohnehin meist 1-Bit schwarzweiß dargestellt. Es müssen also bei einer 8x9 Rasterschrift pro Buchstabe 9 Byte in aufeinanderfolgenden Scanzeilen pro Ziffer abgelegt werden und dann über eine Mustererkennung gewandelt werden. Hierbei wird bevorzugt eine Äquidistanz-Schriftart verwendet.
Wird diese Variante im Controller der Ausschnittsanzeige verwendet, dann muss die Anwendung lediglich einen bestimmten Text beispielsweise in die Titelzeile aufnehmen, der die Position bezeichnet; z.B. die Zeichenkette

"FRAME_200x300@144,166_END",

womit ein Ausschnitt von 200x300 Pixeln ab Position 144/166 gewählt wird.

Die Erfindung ist ferner auch anwendbar, indem die Bestimmung der Koordinaten auf dem Rechner erfolgt, der den Bildschirminhalt erzeugt. Dabei überwacht ein Hintergrundprozess den Bildschirminhalt und sucht nach vorgegebenen Kriterien nach den Markierungen für den anzuzeigenden Teil des Gesamtbildschirms, wobei die oben dargestellten Methoden der Codierung verwendet werden können. Die Koordinaten werden dann von diesem Programm über eine passende Schnittstelle, z.B. nach dem VESA-Standard, mit dem auch die Eigenschaften eines 'plug-and-play' Bildschirms bestimmt werden und dieser in eine Energiesparmodus versetzt wird, an den Controller übergeben, der nach der o.g. Patentveröffentlichung gestaltet ist. Zwar wird bei dieser Variante wieder ein Steuerkanal zu der Anzeige verwendet; dessen Ansteuerung ist aber von dem Anwendungsprogramm unabhängig und durch die genannten Methoden einfacher.

**Patentansprüche**

1. Einrichtung zur Selektion eines Teilfensters einer graphischen Anzeige eines Computers, **dadurch gekennzeichnet, dass** die Position des Teilfensters durch den Bildinhalt der graphischen Anzeige bestimmt wird.

2. Einrichtung nach Anspruch 1, wobei die Bildinformation an einer vorbestimmten Stelle des Bildinhalts als Steuerinformation interpretiert wird, die die Position des anzuzeigenden Teilfensters bestimmt.

3. Einrichtung nach Anspruch 1, wobei eine Steuerinformation, die die Position des anzuzeigenden Teilfensters bestimmt, mit Redundanz codiert ist und mittels der Redundanz im Bildinhalt lokalisiert wird.

4. Einrichtung nach einem der Ansprüche 1 bis 3, wobei die Position von vorbestimmten Pixelkombinationen die Lage des Teilfensters bestimmt.

5. Einrichtung nach Anspruch 4, wobei das anzuzeigende Fenster durch eine vorgegebene Farbe eines umlaufenden Rands bestimmt wird.

6. Einrichtung nach dem vorigen Anspruch, wobei der umlaufende Rand durch einen Übergang von vorbestimmten Farben bestimmt wird.

7. Einrichtung nach Anspruch 4, wobei eine vorbestimmte Ecke des anzuzeigenden Fensters durch ein vorbestimmtes Muster von Bildpunkten bestimmt wird.

8. Einrichtung nach einem der Ansprüche 1 bis 3, wobei eine Folge von Pixel abgetastet, digitalisiert und decodiert wird und die decodierten Bits die Position des Teilfensters bestimmen.

9. Einrichtung nach dem vorherigen Anspruch, wobei die Decodierung nach Verfahren der magnetischen Aufzeichnung erfolgt.

10. Einrichtung nach Anspruch 8, wobei die Decodierung eine Zeichenerkennung ist, die die graphische Darstellung eines Zeichens in codierte Information umwandelt.

11. Einrichtung zur Anzeige eines Teils einer für einen Bildschirm bestimmten Anzeigeinformation, wobei der anzuzeigende Teil als Teilfenster mittels einer der Einrichtungen gemäß den vorherigen Ansprüchen bestimmt wird.